# EUROPÄISCHE PATENTSCHRIFT

(11) **EP 1 745 877 B1**
(45) Veröffentlichungstag und Bekanntmachung des Hinweises auf die Patenterteilung: **21.09.2011**
(21) Anmeldenummer: 06014786.5
(22) Anmeldetag: 15.07.2006
(51) Int. Cl.: B23F 9/10

(54) **Verzahnmaschine, insbesondere Kegelrad-Verzahnmaschine, mit einer Vorrichtung zum Anfasen/Entgraten der Kanten eines Werkstückes**
Gear cutting machine, in particular bevel gear cutting machine, with a device for chamfering/deburring tooth edges
Machine de taillage de roues dentées, notamment machine de taillage de roues dentées coniques, avec un dispositif pour la chanfreiner et l' ébavurer des extrémités de dents des roues dentées

(30) Priorität: 22.07.2005 DE 202005011790 U
(43) Veröffentlichungstag der Anmeldung: 24.01.2007
(73) Patentinhaber: THE GLEASON WORKS, Rochester New York 14692-2970 (US)
(72) Erfinder: Peiffer, Klaus, 8304 Wallisellen (CH); Philippin, Matthias, 71277 Rutesheim (DE)
(74) Vertreter: Jackisch-Kohl, Anna-Katharina

(56) Entgegenhaltungen:
- DE-B- 1 284 256
- DE-U1-202004 008 263
- JP-A- 10 076 425

## Beschreibung

Die Erfindung betrifft eine Kegel-Verzahnmaschine nach dem Oberbegriff des Anspruches 1.

Bei bogenverzahnten Kegelrädern schneiden sich die Flanken mit den Rückenflächen der Zähne unter einem bestimmten Winkel. Dieser Winkel ist am Zahn, also nicht an der Zahnlücke betrachtet, beim Übergang der konkaven Flanke zur Rückenfläche ein spitzer Winkel. An dieser Stelle bildet sich bei einer spanabhebenden Bearbeitung ein besonders großer Grat. Dieser Grat muss entfernt werden. In vielen Fällen ist es darüber hinaus erwünscht, nicht nur diesen Grat zu entfernen, sondern eine Fase anzubringen. Bei Rädern mit einer derartigen Fase ist die Verletzungsgefahr bei Transport und Montage an der sonst scharfen Kante gering; man vermeidet außerdem an diesen Stellen beim Härten unzulässig große Härtewerte.

Mitunter ist auch am Übergang der konvexen Flanken zur Rückenflanke ein Anfasen oder Entgraten erwünscht. In diesem Fall ist also ein Bearbeiten an beiden äußeren Zahnenden des Kegelrades erforderlich.

Zum Anfasen/Entgraten der Kanten von Kegelrädern ist unter anderem die Vorrichtung nach DE 20 200 40 08 263 U1 (2004.09.16) bekannt. Bei dieser Vorrichtung erfolgt das Anfasen/Entgraten auf einer Kegelradbearbeitungsmaschine. Dazu ist die Maschine mit einem Anfas/Entgratmesserkopf ausgerüstet. Dieser Messerkopf ist am Werkstückspindelträger befestigt. Er muß, abgesehen von der zum Anfasen/Entgraten erforderlichen Drehung des Werkstückes, alle Bewegungen zum Positionieren relativ zum Werkstück und zum Bearbeiten selbst ausführen. Dies ist aufwändig.

Der Erfindung liegt die Aufgabe zugrunde, die gattungsgemäße Kegelrad-Verzahnmaschine so auszubilden, dass der Anfas/Entgratvorgang am Kegelrad einfach und zuverlässig vorgenommen werden kann.

Diese Aufgabe wird bei der gattungsgemäßen Kegelrad-Verzahnmaschine erfindungsgemäß mit den kennzeichnenden Merkmalen des Anspruches 1 gelöst.

Bei der erfindungsgemäßen Kegelrad-Verzahnmaschine ist die Vorrichtung mit dem Anfas/Entgratwerkzeug an einem festen Teil der Verzahnmaschine befestigt. Dadurch ist es problemlos möglich, das Anfas/Entgratwerkzeug zum Entfernen der Kanten am Kegelrad einfach und zuverlässig in die Arbeitslage zu verstellen. Die Vorrichtung hat eine Linearführung sowie eine Schwenkachse, mit denen das Werkzeug in die zum Anfasen/Entgraten des Kegelrades optimale Lage positioniert werden kann. Die Linearführung verläuft senkrecht zur Werkstück- und zur Werkzeug-Drehachse der Maschine, während die Schwenkachse parallel zu der Achse liegt, in der die Werkstückachse vertikal verschoben werden kann.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: eine erfindungsgemäße Kegelrad-Verzahnmaschine mit einer Vorrichtung in perspektivischer Darstellung,
- Fig. 2: die Vorrichtung in perspektivischer Darstellung,
- Fig. 3: einen Teil eines mit der Vorrichtung zu behandelnden Zahnrades.

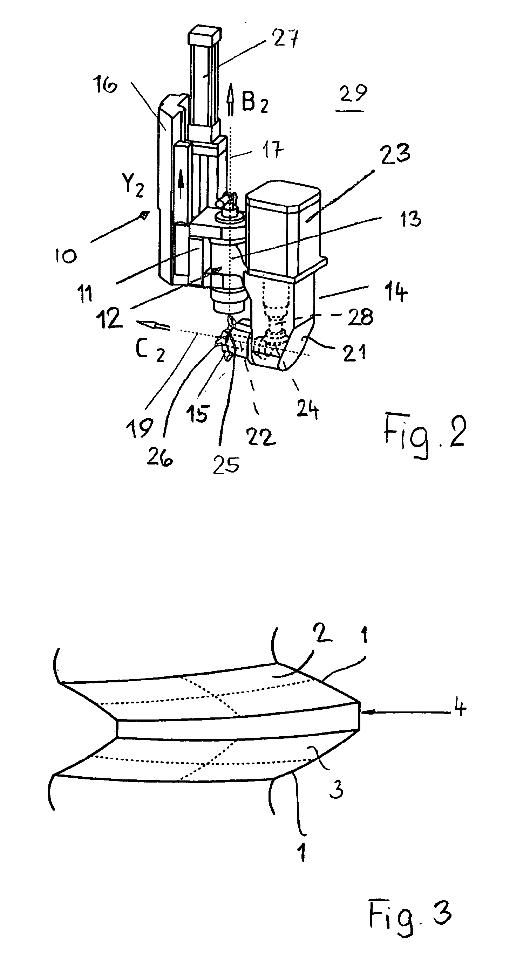

Mit der im folgenden beschriebenen Vorrichtung werden die Kanten 1 zwischen den Flanken 2, 3 und einer (in Fig. 3 verdeckten) Rückenfläche 4 eines Kegelrades angefast bzw. entgratet (Fig. 3). Mit der Vorrichtung ist es auch möglich, die Bereiche der Kanten 1, an denen die Übergänge der Flanken 2, 3 zum Kopf bzw. Fuß gegebenenfalls verrundet sind (Kopf- bzw. Fußrundung), zu bearbeiten.

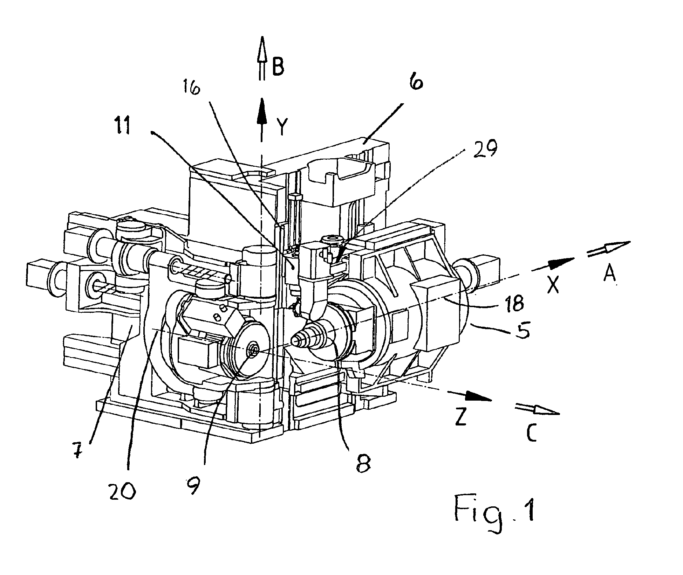

Fig. 1 zeigt eine Maschine, an der die zum Anfasen/Entgraten eingesetzte Vorrichtung vorgesehen ist. Die Maschine ist eine Kegelrad-Verzahnmaschine und hat einen Werkstückschlitten 5, der in X-Richtung (Richtung der Werkstückdrehachse 18) verschiebbar ist. Der Werkstückschlitten 5 ist außerdem längs eines Ständers 6 der Maschine senkrecht zur X-Richtung in Y-Richtung (vertikal) verstellbar. Die Maschine ist außerdem mit einem Werkzeugschlitten 7 versehen, der senkrecht zur Y-Richtung in Z-Richtung verstellbar ist. Der Werkstückschlitten 5 hat eine Werkstückspindel 8, die um die A-Achse drehbar ist. Der Werkzeugschlitten 7 ist um eine B-Achse schwenkbar, die parallel zur Y-Achse liegt. Der Werkzeugschlitten 7 ist mit einer Werkzeugspindel 9 versehen, die um eine C-Achse drehbar ist; die C-Achse verläuft in Richtung Z.

Die Arbeitsweise einer solchen Maschine ist bekannt und wird darum auch nicht näher erläutert. Die beschriebene und dargestellte Maschine weist die Vorrichtung 29 auf, mit der das Kegelrad angefast bzw. entgratet werden kann.

Die Vorrichtung hat eine Linearführung 10 (Fig. 2) für einen Schlitten 11. Er ist mit einem Schwenkgelenk 12 verbunden, dessen schwenkbarer Teil 13 starr mit einer Antriebseinheit 14 für ein Werkzeug 15 verbunden ist. Es ist im Ausführungsbeispiel ein Schlagzahnfräser, der für das Bearbeiten im kontinuierlichen Verfahren ein- oder mehrgängig ausgebildet sein kann. Für das Arbeiten im Einzelteilverfahren kommt ein scheibenförmiges Werkzeug zum Einsatz.

Die Linearführung 10 der Vorrichtung erstreckt sich in Y-Richtung. Die Schwenkachse B2 der Vorrichtung liegt parallel zur Y- und zur Y2-Achse.

Der feststehende Teil 16 der Linearführung 10 ist am Ständer 6 der Maschine angebracht. Die Linearführung 10 verläuft senkrecht zur Werkstückdrehachse A und senkrecht zur Werkzeugdrehachse C. Die Drehachse 17 des Schwenkgelenkes 12 liegt parallel zur Linearführung 10 der Vorrichtung und damit auch parallel zur Y-Achse.

Das Werkzeug 15 hat eine Drehachse 19, die senkrecht zur Drehachse 17 des Schwenkgelenkes 12 liegt. Über das Schwenkgelenk 12 kann die Drehachse 19 des Werkzeuges 15 in eine zum Anfasen/Entgraten günstige Position gebracht werden.

Die Antriebseinheit 14 hat ein Gehäuse 21, eine Werkzeugspindel 22 für das Werkzeug 15, einen Motor 23 zum Antrieb der Werkzeugspindel 22 und ein Getriebe 24, mit dem die Motorwelle 28 mit der Werkzeugspindel 22 verbunden ist. Im Ausführungsbeispiel ist das Getriebe 24 ein Winkelgetriebe, insbesondere ein Kegelradgetriebe. Dieses Winkelgetriebe 24 ist zum Beispiel aus Arbeitsraumgründen vorgesehen. Grundsätzlich ist das Getriebe 24 nicht notwendig, wenn ausreichend Platz für die Antriebseinheit 14 an der Maschine vorhanden ist.

Für das Werkzeug 15 ist die Verschiebeachse Y2 vorgesehen, die vertikal verläuft. Zum Schwenken des Werkzeuges 15 ist die Achse B2 vorgesehen. Das Werkzeug 15 hat außerdem die C2-Achse, mit der es gedreht werden kann. Die Achsen B2 und C2 sind vorteilhaft NC-Achsen.

Das Schlagzahnwerkzeug 15 hat einen Grundkörper 25, in den Wendeschneidplatten 26 mit je einer Wendeschneidplatte je Werkzeuggang eingesetzt sind. Für die Wendeschneidplatten 26 kommt als Schneidstoff unter anderem beschichtetes Feinstkornhartmetall, pulvermetallurgisch hergestellter Schnellarbeitsstahl und Keramik in Betracht. Die Schneidkanten der Wendeschneidplatten 26 können der Form der Werkstücke angepaßt werden. Im Normalfall sind die Schneidkanten der Wendeschneidplatten 26 jedoch an den Flanken gerade. Sie besitzen am Werkzeug-Außendurchmesser einen Radius, um auch Übergänge der Kanten 1 der Werkstückflanken 2, 3 zum Fuß bzw. zum Kopf des Werkstückes bearbeiten zu können.

Der zum Anfasen/Entgraten erforderliche Abstand zwischen den Achsen 18 und 19 ist unter anderem von der Werkzeug- und der Werkstückgeometrie abhängig. Da die Achsen Y und Y2 parallel zueinander verlaufen, kann der Abstand über die ohnehin an der Maschine vorhandene Achse Y eingestellt werden. Die Position des Werkzeuges auf der Y2-Achse kann deshalb während der Bearbeitung für alle Bearbeitungsfälle dieselbe sein. Auch die Ruheposition kann für alle Anwendungen gleich gewählt werden. Eine NC-Achse ist hier nicht erforderlich.

Bei einer einfachen Ausführungsform erfolgt das Positionieren der Achse B2 von Hand, so daß eine NC-Achse nicht erforderlich ist. Führt man jedoch B2 als NC-Achse aus, so läßt sich die Einrichtzeit senken; außerdem erleichtert diese Achse B2 das Bearbeiten besonders komplizierter Kanten am Werkstück.

Im einfachsten Fall erfolgt das Positionieren zwischen Werkstück und Anfas/Entgrat-Werkzeug 15 über die Achsen X, Y, B2 und A. Die NC-Achsen A und C2 werden für das Arbeiten im kontinuierlichen Verfahren entsprechend dem Verhältnis aus Werkstückzähnezahl und Werkzeuggangzahl synchronisiert. Das Zustellen erfolgt über eine Werkstück-Zusatzdrehung ΔA.

Soll die gewünschte Fase am Werkstück der idealen Werkstückkante besser angenähert werden, so sind die Achsen X, Y und A sowie gegebenenfalls B2 entsprechend anzupassen.

Das Bearbeiten der Kanten des Werkstückes läuft als Einflankenbearbeitung ab, und zwar üblicherweise in einem kontinuierlichen Verfahren. Soll das Verfahren jedoch diskontinuierlich, also im Einzelteilverfahren, ablaufen, so muß ein scheibenförmiges Werkzeug eingesetzt werden. In diesem Fall sind die Achsen A und C2 nicht synchronisiert; die Anzahl der Schneidplatten des Werkzeuges kann unabhängig von der Zähnezahl des Werkstückes - in Grenzen "beliebig" - festgelegt werden.

Der Prozeß kann sowohl beim Arbeiten im kontinuierlichen als auch im diskontinuierlichen Verfahren im Teach-in erfolgen.

Statt des Teach-in-Verfahrens können die Bahn- und die Achskoordinaten für die Bearbeitung der Kanten des Werkstückes auch berechnet und die erforderlichen Einstellungen und Bewegungen über die NC der Maschine realisiert werden.

Im Ausführungsbeispiel erfolgt das Verfahren des Werkzeuges 15 zwischen Arbeits- und Ruheposition in Y2-Richtung. Prinzipiell möglich ist auch eine nicht parallele Lage von Y2 zu Y oder gar eine nicht lineare Führung bei entsprechendem Antrieb für das Verschieben realisierbar.

Bei der beschriebenen Maschine werden zum Positionieren des Werkzeuges 15 zum Werkstück unter anderem die an der Maschine ohnehin vorhandenen Achsen Y und X verwendet, so daß die Vorrichtung entsprechende Achsen nicht zusätzlich benötigt.

## Patentansprüche

1. Kegelrad-Verzahnmaschine mit einer Vorrichtung (29) zum Anfasen/Entgraten der Kanten (1) zwischen den Flanken (2, 3) und der Rückenfläche (4), insbesondere an den äußeren Zahnenden eines in der Verzahnmaschine gefertigten Kegelrades mittels eines Werkzeuges (15),
**dadurch gekennzeichnet, dass** die Vorrichtung (29) an einem festen Teil (6) der Maschine befestigt ist, dass die Vorrichtung nur eine Linearführung (10) und eine Schwenkachse (B2) für das Werkzeug (15) aufweist, und dass die Linearführung (10) senkrecht zur Werkstück- und zur Werkzeug-Drehachse (18, 20) der Maschine verläuft und die Schwenkachse (B2) parallel zur Achse (Y) liegt, in der die Werkstückachse vertikal verschoben werden kann.

2. Verzahnmaschine nach Anspruch 1,
**dadurch gekennzeichnet, dass** der feste Teil (6) ein Ständer der Maschine ist.

3. Verzahnmaschine nach Anspruch 1 oder 2,
**dadurch gekennzeichnet, dass** das Werkzeug (15) zumindest eine Schneidplatte (26), bei Ausführung als mehrgängiges Werkzeug eine Schneidplatte je Werkzeuggang, aufweist, deren Schneide(n) eine von der Kantengeometrie des Werkstückes (4) abweichende Form hat (haben).

4. Verzahnmaschine nach einem der Ansprüche 1 bis 3,
**dadurch gekennzeichnet, dass** das Werkzeug (15) durch eine Antriebseinheit (14) antreibbar ist.

5. Verzahnmaschine nach Anspruch 4,
**dadurch gekennzeichnet, dass** die Antriebseinheit (14) einen Motor (23) aufweist, dessen Motorwelle (28) über ein Getriebe (24) mit einer Spindel (22) für das Werkzeug (15) verbunden ist.

6. Verzahnmaschine nach Anspruch 5,
**dadurch gekennzeichnet, dass** das Getriebe (24) ein Winkelgetriebe ist.

7. Verzahnmaschine nach einem der Ansprüche 1 bis 6,
**dadurch gekennzeichnet, dass** die Schwenkachse (B2) der Vorrichtung eine NC-Achse ist.

8. Verzahnmaschine nach einem der Ansprüche 1 bis 7,
**dadurch gekennzeichnet, dass** die Drehachse (C2) des Werkzeuges (15) eine NC-Achse ist.

9. Verzahnmaschine nach Anspruch 7 oder 8,
**dadurch gekennzeichnet, dass** die NC-Achsen (B2, C2, X, Y) für eine Bahnsteuerung des Werkzeuges (15) miteinander verknüpft sind.

10. Verzahnmaschine nach einem der Ansprüche 1 bis 9,
**dadurch gekennzeichnet, dass** die Drehbewegungen der Achsen (A, C2) entsprechend dem Verhältnis aus Werkstückzähnezahl und Werkzeuggangzahl synchronisiert sind.

11. Verzahnmaschine nach einem der Ansprüche 1 bis 10,
**dadurch gekennzeichnet, dass** zum Verfahren des Werkzeuges (15) längs der Linearführung (10) ein Antrieb (27) vorgesehen ist.

12. Verzahnmaschine nach Anspruch 11,
**dadurch gekennzeichnet, dass** der Antrieb (27) ein hydraulischer Linearmotor ist.

## Claims

1. Bevel gear cutting machine having a device (29) to chamfer/deburr the edges (1) between the flanks (2, 3) and the back face (4), in particular at the outer tooth ends of a bevel gear produced in the gear cutting machine by means of a tool (15),
**characterised in that** the device (29) is attached to a fixed part (6) of the machine, that the device comprises only one linear track (10) and one pivot axis (B2) for the tool (15) and that the linear track (10) extends perpendicular to the workpiece axis of rotation and to the tool axis (18, 20) of rotation of the machine and that the pivot axis (B2) is positioned parallel to the axis (Y), in which the workpiece axis can be moved vertically.

2. Gear cutting machine according to claim 1,
**characterised in that** the fixed part (6) is a machine stand.

3. Gear cutting machine according to claim 1 or 2,
**characterised in that** the tool (15) comprises at least one insert (26), and when used as a multithread tool, one insert per start, the insert/inserts of which has/have a shape which deviates from the geometry of the edges of the workpiece (4).

4. Gear cutting machine according to one of the claims 1 to 3,
**characterised in that** the tool (15) can be driven by a drive unit (14).

5. Gear cutting machine according to claim 4
**characterised in that** the drive unit (14) includes a motor (23), the motor shaft (28) of which is connected via a transmission (24) with a spindle (22) for the tool (15).

6. Gear cutting machine according to claim 5,
**characterised in that** the transmission (24) is a bevel gear transmission.

7. Gear cutting machine according to one of the claims 1 to 6,
**characterised in that** the pivot axis (B2) of the device is a NC-axis.

8. Gear cutting machine according to one of the claims 1 to 7,
**characterised in that** the axis of rotation (C2) of the tool (15) is a NC-axis.

9. Gear cutting machine according to claim 7 or 8,
**characterised in that** the NC-axes (B2, C2, X, Y) are connected with each other for a continuous path control of the tool (15).

10. Gear cutting machine according to one of the claims 1 to 9,
**characterised in that** the rotary motions of the axes (A, C2) are synchronised corresponding to the ratio of the number of teeth of the workpiece and the number of starts of the tool.

11. Gear cutting machine according to one of the claims 1 to 10,
**characterised in that** a drive (27) is provided to traverse the tool (15) along the linear track (10).

12. Gear cutting machine according to claim 11,
**characterised in that** the drive (27) is a hydraulic linear motor.

## Revendications

1. Machine de taillage de roues dentées coniques, avec un dispositif (29) pour la chanfreiner l'ébavurer des extrémités (1) entre les flancs (2, 3) et la surface dorsale (4), en particulier aux extrémités des dents d'une roue conique, fabriquée dans la machine de taillage à l'aide d'un outil (15),
**caractérisée en ce que** le dispositif (2) est fixé dans une partie solide (6) de la machine, que le dispositif comprend seulement un guidage linéaire (10) et un axe de pivotement (B2) pour l'outil (15) et que le guidage linéaire (10) se déroule perpendiculairement à l'axe de rotation de la pièce usinée et de l'outil (18, 20) et que l'axe de pivotement (B2) est situé parallèlement à l'axe (Y), dans lequel l'axe de la pièce usinée peut être décalé verticalement.

2. Machine de taillage selon revendication 1,
**caractérisée en ce que** la partie solide (6) est un stand de la machine.

3. Machine de taillage selon revendication 1 ou 2,
**caractérisée en ce que** l'outil (15) comprend au moins une plaquette de coupe (26), en tant que réalisation comme outil multipas une plaquette de coupe pour chaque pas d'outil, la coupe/les coupes de celle-ci/celles-ci ayant une forme différente de la géométrie des extrémités de la pièce usinée (4).

4. Machine de taillage selon une des revendications 1 à 3,
**caractérisée en ce que** l'outil (15) peut être actionné par une unité d'entraînement (14).

5. Machine de taillage selon revendication 4,
**caractérisée en ce que** l'unité d'entraînement (14) comprend un moteur (23), dont l'arbre de moteur (28) est connecté par une transmission (24) avec une broche (22) pour l'outil (15).

6. Machine de taillage selon revendication 5,
**caractérisée en ce que** la transmission (24) est un engrenage angulaire.

7. Machine de taillage selon une des revendications 1 à 6,
**caractérisée en ce que** l'axe de pivotement (B2) du dispositif est un axe à commande numérique.

8. Machine de taillage selon une des revendications 1 à 7,
**caractérisée en ce que** l'axe de rotation (C2) de l'outil est un axe à commande numérique.

9. Machine de taillage selon revendication 7 ou 8,
**caractérisée en ce que** les axes à commande numérique (B2, C2, X, Y) sont connectés l'un à l'autre pour une commande continue de l'outil.

10. Machine de taillage selon une des revendications 1 à 9,
**caractérisée en ce que** les mouvements rotatifs des axes (A, C2) sont synchronisés en correspondance avec la relation du nombre des dents de la pièce à usiner et du nombre de pas d'outil.

11. Machine de taillage selon une des revendications 1 à 10,
**caractérisée en ce que** pour le déplacement de l'outil (15) le long du guidage linéaire un entraînement (27) est prévu.

12. Machine de taillage selon revendication 11,
**caractérisée en ce que** l'entraînement (27) est un moteur linéaire hydraulique.
